# EUROPÄISCHE PATENTSCHRIFT

(11) **EP 3 345 820 B1**
(45) Veröffentlichungstag und Bekanntmachung des Hinweises auf die Patenterteilung: **12.08.2020**
(21) Anmeldenummer: 17207629.1
(22) Anmeldetag: 15.12.2017
(51) Int. Cl.: B62L 1/00, B62L 3/02, B60T 8/32, B60T 8/42

(54) **BREMSANPASSUNGSEINRICHTUNG, HYDRAULISCHE BREMSANLAGE UND FAHRZEUG**
BRAKE ADAPTING DEVICE, HYDRAULIC BRAKE SYSTEM AND VEHICLE
DISPOSITIF DE RÉGLAGE DES FREINS, INSTALLATION DE FREINAGE HYDRAULIQUE ET VÉHICULE

(30) Priorität: 04.01.2017 DE 102017200051
(43) Veröffentlichungstag der Anmeldung: 11.07.2018
(73) Patentinhaber: Robert Bosch GmbH, 70442 Stuttgart (DE)
(72) Erfinder: Wienss, Andreas, 72800 Eningen Unter Achalm (DE); Widmaier, Georg, 71229 Leonberg (DE); Faust, Arno, 72131 Ofterdingen (DE); Dasbach, Gregor, 72074 Tuebingen (DE); Greiner, Rinaldo, 72762 Reutlingen (DE)

(56) Entgegenhaltungen:
- WO-A1-97/37878
- CN-A- 105 882 857
- DE-A1- 1 780 667
- DE-A1-102010 038 525
- DE-A1-102012 222 058
- DE-A1-102014 201 792
- DE-U1-202017 001 934

## Beschreibung

### Stand der Technik

Die vorliegende Erfindung betrifft eine Bremsanpassungseinrichtung, eine hydraulische Bremsanlage sowie ein Fahrzeug. Die vorliegende Erfindung betrifft insbesondere eine Bremsanpassungseinrichtung für eine hydraulische Bremsanlage, für ein mit Muskelkraft und zusätzlich mit oder ohne Motorkraft antreibbares Fahrzeug, ein Fahrrad, Elektrofahrrad, eBike und/oder Pedelec, eine hydraulische Bremsanlage für ein mit Muskelkraft und zusätzlich mit oder ohne Motorkraft antreibbares Fahrzeug, sowie ein mit Muskelkraft und zusätzlich mit oder ohne Motorkraft antreibbares Fahrzeug als solches, insbesondere ein Fahrrad, Elektrofahrrad, eBike oder Pedelec.

Zum Abbremsen von Rädern an Fahrzeugen werden auch hydraulische Bremsanlagen verwendet. Bei derartigen Bremsanlagen sind häufig Einstellmöglichkeiten vorgesehen, um einen Bremspunkt festzusetzen, also denjenigen Punkt auf dem Weg des Bremsbetätigungsmittels, zum Beispiel eines Bremshebels, ab welchem die Bremswirkung einsetzt, also die Bremse greift.

Aus der Schrift WO 97/37878 A1 ist ein hydraulisches Bremssystem bekannt, bei dem ein Hydraulikzylinder einen Volumen veränderlichen Aktuator aufweist, mittels dem Bremsdruck in einer Radbremse erzeugt werden kann. Hierbei weist der Hydraulikzylinder in einem Bereich ein phasenveränderliches Material auf, mittels dem sich der Aktuator kontrahieren lässt. Durch diese Kontrahierung wird ein Kolben in dem Hydraulikzylinder zurückgezogen, so dass in der Bremsleitung zur Radbremse eine Reduzierung des Bremsdrucks erfolgt. Dieses Dokument legt die Präambel des Anspruchs 1 offen.

Auf Grund der Bauweise bestehender hydraulischer Bremsanlagen und insbesondere den dabei verwendeten Leitungssystemen ist das Verhältnis von Betätigungsweg oder Betätigungskraft zur tatsächlichen Bewegung des Bremselements und der ausgeübten Bremskraft vergleichsweise starr vorgegeben. Anpassungen auf Fahrerbedürfnisse sind nicht möglich und können bei zu steif eingestellten Bremsen, gerade bei hohen Geschwindigkeiten, zu einem Überbremsen und damit zu einer Unfallgefahr durch Sturz führen.

### Offenbarung der Erfindung

Die erfindungsgemäße Bremsanpassungseinrichtung mit den Merkmalen des unabhängigen Anspruches 1 weist demgegenüber den Vorteil auf, dass mit vergleichsweise einfachen Mitteln auch die Steifigkeit, also das Ansprechverhalten einer hydraulischen Bremsanlage angepasst werden kann. Dies wird erfindungsgemäß mit den Merkmalen des unabhängigen Anspruches 1 dadurch erreicht, dass eine Bremsanpassungseinrichtung für eine hydraulische Bremsanlage, insbesondere für ein mit Muskelkraft und zusätzlich mit oder ohne Motorkraft antreibbares Fahrzeug, Fahrrad, Elektrofahrrad, eBike und/oder Pedelec, geschaffen wird, mit einem Anpassungsgefäß und einem Fluidwiderstandselement, wobei das Anpassungsgefäß über das Fluidwiderstandselement mit einer Bremsleitung, einem Geber und/oder einem Nehmer der Bremsanlage hydraulisch verbindbar ist und wobei das Fluidwiderstandselement für einen anpassbaren Fluidübertritt zwischen Bremsleitung, dem Geber bzw. dem Nehmer und Anpassungsgefäß mit einem steuerbar anpassbaren Fluidwiderstand gegenüber einem Bremsfluid in der Bremsleitung, dem Geber bzw. dem Nehmer ausgebildet ist, wobei das Fluidwiderstandselement (50) ein Durchströmungselement aufweist, welches eine Öffnung (44) des Anpassungsgefäßes (40) für einen Fluiddurchtritt verschließt und/ oder das Anpassungsgefäß (40) in zwei voneinander getrennte Kompartimente (41, 42) unterteilt und welches einen variierbaren Strömungswiderstand aufweist.

Ein Kernaspekt der vorliegenden Erfindung ist dabei also das Vorsehen eines Anpassungsgefäßes und dessen Anbindbarkeit an eine Bremsleitung, einen Geber bzw. einem Nehmer über ein in seinem Fluidwiderstand variierbares Fluidwiderstandselement. Durch Anpassung des Fluidwiderstandes, also des Widerstandes gegenüber dem Bremsfluid beim Übertritt zwischen der Bremsleitung, dem Geber bzw. dem Nehmer und dem Anpassungsgefäß, kann in variierbarer Weise z.B. ein Teil des durch die Bremsbetätigung erzeugten Volumenstroms und Bremsfluids aus der Bremsleitung, dem Geber bzw. dem Nehmer variiert abgezweigt werden, so dass - je nach Art der Variation der Abzweigung - eine Änderung des Bremsverhaltens durch Reduzieren oder Steigern der Steifigkeit erfolgt. Es muss im Endeffekt und je nach der Art der Anpassung ein längerer oder kürzerer Betätigungsweg für eine zu erzeugende Bewegung der Bremse und somit für eine erzeugte Bremskraft zurückgelegt werden. Dies wird beim Bremsen als ein weicheres bzw. härteres Bremsverhalten empfunden. Die Steifigkeit der Bremse wird auf diese Weise verändert, also reduziert bzw. gesteigert.

Unter dem Begriff Fluidwiderstand wird im Sinne der vorliegenden Erfindung in diesem Zusammenhang ein jeglicher Widerstand verstanden, der im Betrieb in mechanischer Weise dem Strömen des Bremsfluids zwischen der Bremsleitung und dem Anpassungsgefäß entgegengesetzt wird. Es kann sich dabei um einen hydrodynamischen, also aus der Bewegung des Fluids heraus entstehenden Strömungswiderstand handeln, z.B. in einem Rohr- oder Kapillarsystem, oder um einen hydrostatischen Widerstand, im Sinne eines Gegendrucks oder dergleichen, z.B. verursacht durch ein elastisches Hindernis.

Unter einem Geber wird im Sinne der Erfindung eine Struktur verstanden, in welcher zum Beispiel über einen Aktuator, einen Bremshebel oder dergleichen Druck im Bremsfluid aufgebaut wird. Unter einem Nehmer wird im Sinne der Erfindung eine Struktur verstanden, an welche der aufgebaute Druck im Bremsfluid weitergeleitet wird. Dabei kann es sich um einen Druck- oder Bremszylinder im Bereich des Bremssattels oder dergleichen handeln.

Die Unteransprüche zeigen bevorzugte Weiterbildungen der Erfindung.

Eine baulich besonders einfach ausgestaltete Bremsanpassungseinrichtung ergibt sich, wenn das Fluidwiderstandselement eine Membran oder Wand aufweist, welche eine Öffnung des Anpassungsgefäßes für einen Fluiddurchtritt verschließt und/oder das Anpassungsgefäß in zwei voneinander getrennte Kompartimente unterteilt.

Durch entsprechende Ausgestaltung der Membran oder Wand kann der variable Fluidwiderstand des Fluidwiderstandselements erzeugt werden.

So ist es bei einer bevorzugten Ausführungsform vorgesehen, dass die Membran eine variierbare Steifigkeit ausweist.

Die variierbare Steifigkeit der Membran kann über verschiedener Mittel realisiert werden.

So ist es bei einer Weiterbildung der erfindungsgemäßen Bremsanpassungseinrichtung vorgesehen, dass die variierbare Steifigkeit der Membran bewirkt wird durch
- eine variierbare Elastizität, innere Beweglichkeit, insbesondere Dehnbarkeit und/oder Biegbarkeit, und/oder äußere Verschiebbarkeit,
- eine variierbare Vorspannung einer die Membran oder Wand von einer Rückseite der Membran unterstützenden elastischen Einrichtung, insbesondere einer Feder,
- eine Unterstützung der Membran oder Wand von einer Rückseite durch ein Anpassungsfluid oder-gas entsprechend einer variierbaren Kompressibilität, entsprechend eines variierbaren Drucks und/oder entsprechend eines variierbaren Volumens,
- eine Unterstützung der Membran oder Wand von einer Rückseite durch eine sich von einem Rand der Membran oder Wand her sich erstreckende Lochblende eines entsprechend variierbaren Durchmessers des Lochs,
- eine über eine Aufhängung der Membran oder Wand - insbesondere über deren Rand - aufprägte entsprechend variierbare Zugspannung
oder deren beliebige Kombination.

Im Sinne der vorliegenden Erfindung können die Membran oder die Wand als elastische/flexible oder als starre Komponente ausgebildet sein. Die variierbare Steifigkeit ergibt sich dann aus den variierbaren elastischen/flexiblen Eigenschaften und/oder einer variierbaren Beweglichkeit der jeweiligen Membran oder Wand in Bezug auf andere Baukomponenten, zum Beispiel im Sinne einer Verschiebbarkeit oder Verschwenkbarkeit.

Insbesondere kann es sich bei der Membran oder Wand um eine Komponente handeln, welche eine Stirnseite oder Stirnfläche eines in einem Volumen verschiebbaren Kolbens oder dergleichen bildet.

Nachfolgend werden die Begriffe Membran und Wand synonym verwendet, sofern nicht explizit etwas anderes gesagt wird.

Alternativ oder zusätzlich können auch andere Maßnahmen zur Ausgestaltung des Fluidwiderstandselements, also jenseits der Ausgestaltung mit oder als Membran, versehen sein.

Zur konkreten Realisierung der Variierbarkeit des Fluidwiderstands des Fluidwiderstandselements können sämtliche manuell verstellbaren Maßnahmen vorgesehen sein.

Diese können ersetzt oder ergänzt werden durch angetriebene Mechanismen, das heißt zum Beispiel durch entsprechende Verstellmechanismen, auch in automatischer Form.

Dabei kann es von besonderem Vorteil sein, wenn gemäß einer anderen Ausgestaltungsform der erfindungsgemäßen Bremsanpassungseinrichtung eine Auswerte- und Steuereinheit vorgesehen ist, welche zur Steuerung des Zustands des Fluidwiderstandselements ausgebildet ist, insbesondere über eine Steuerung des Wertes des Fluidwiderstands des Fluidwiderstandselements.

Ferner betrifft die vorliegende Erfindung eine hydraulische Bremsanlage für ein mit Muskelkraft und zusätzlich mit oder ohne Motorkraft antreibbares Fahrzeug, Fahrrad, Elektrofahrrad, eBike und/oder Pedelec. Diese ist ausgebildet mit einer Bremse, einer Bremsleitung zur hydraulischen Verbindung der Bremse mittels eines Bremsfluids und einer erfindungsgemäßen Bremsanpassungseinrichtung, welche mit der Bremsleitung über das Fluidwiderstandselement der Bremsanpassungseinrichtung hydraulisch verbunden ist.

Dabei kann das Bremsfluid der Bremsleitung aus einem Geberzylinder als Reservoir zugeführt werden, insbesondere durch Wirkung einer Bremsbetätigung Einrichtung, zum Beispiel in Form eines Bremshebels oder Bremspedals.

Bei einer vorteilhaften Weiterbildung der erfindungsgemäßen Bremsanlage ist der Anpassungsbehälter über eine Abzweigungsleitung zwischen einem geberseitig gelegenen Abschnitt der Bremsleitung und einem brems- oder nehmerseitig gelegenen Abschnitt der Bremsleitung mit der Bremsleitung hydraulisch verbunden.

Dabei bewirkt die Abzweigungsleitung eine Unterteilung des Fluidstroms des Bremsfluids in der Bremsleitung. Je nach Maß oder Anteil der abgezweigten Menge an Bremsfluids wird entsprechend die Steifigkeit des Bremsverhaltens der erfindungsgemäßen hydraulischen Bremsanlage moduliert.

Gemäß einem weiteren Aspekt der vorliegenden Erfindung wird auch ein mit Muskelkraft und zusätzlich mit oder ohne Motorkraft antreibbares Fahrzeug geschaffen, insbesondere ein Fahrrad, Elektrofahrrad, eBike, Pedelec oder dergleichen.

Das erfindungsgemäße Fahrzeug weist mindestens ein Rad auf und eine erfindungsgemäß ausgestaltete Bremsanlage zum Bremsen des mindestens einen Rades.

### Kurzbeschreibung der Figuren

Unter Bezugnahme auf die beigefügten Figuren werden Ausführungsformen der Erfindung im Detail beschrieben.
- Figur 1: ist eine schematische Seitenansicht einer Ausführungsform des erfindungsgemäßen Fahrzeugs.
- Figur 2: ist eine schematische Ansicht, welche eine Ausführungsform der erfindungsgemäßen Bremsanpassungseinrichtung zeigt.
- Figuren 3 und 4: sind Diagramme, die den typischen Verlauf der Bremskraft als Funktion der Betätigungskraft durch die bremsende Person beschreiben bzw. den Begriff der Steifigkeit des Bremsverhaltens und seine Variation erläuteren.
- Figuren 5 bis 10: zeigen schematisch verschiedene Ausführungsformen der erfindungsgemäßen Bremsanpassungseinrichtung mit einem membranbasierten Fluidwiderstandselement.
- Figuren 11 bis 14: zeigen in schematischer Darstellung verschiedene Anwendungsfälle erfindungsgemäßer Bremsanpassungseinrichtungen bei entsprechenden erfindungsgemäßen hydraulischen Bremsanlagen.

### Bevorzugte Ausführungsformen der Erfindung

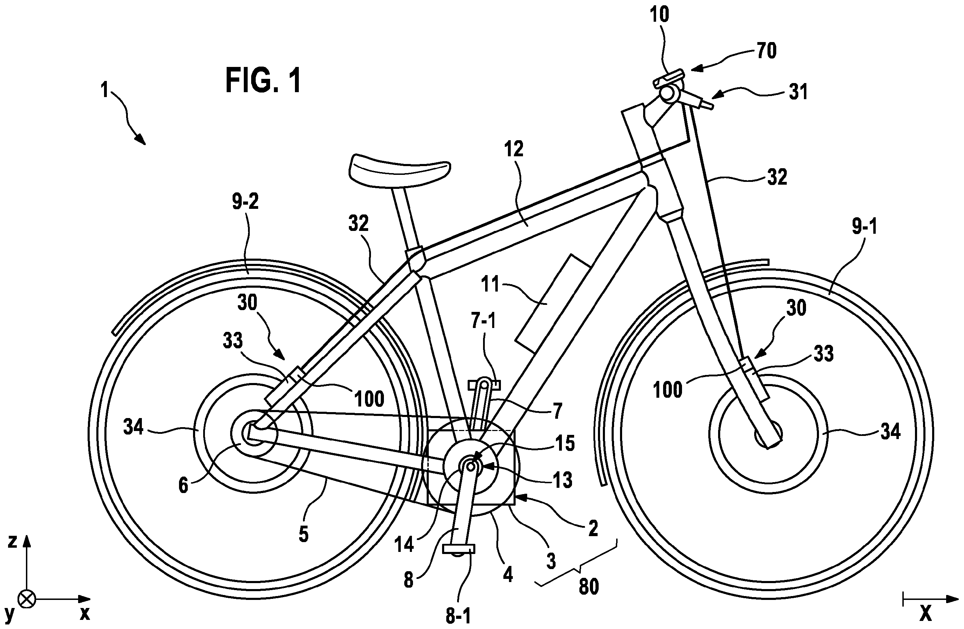

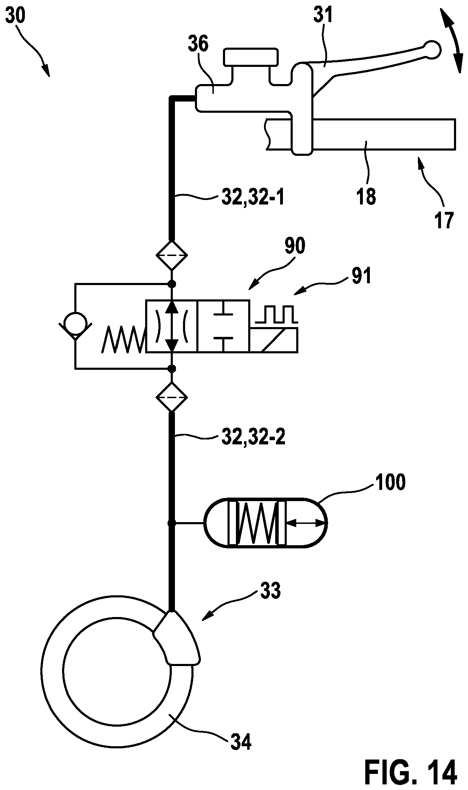

Nachfolgend werden unter Bezugnahme auf die Figuren 1 bis 14 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 sind ein Ritzel 6 und ggf. eine Gangschaltung angeordnet. Kurbeltrieb 2 und elektrischer Antrieb 3 bilden den Antrieb 80 des Fahrzeugs 1.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem elektrischen Antrieb 3 verbunden ist. Im oder am Rahmen 12 oder am Gepäckträger ist ferner Batterie 11 ausgebildet, welche zur Stromversorgung des elektrischen Antriebes 3 dient.

Im Rahmen 12 und/oder in einer Antriebseinheit integriert ist ferner ein Kurbellager 13 oder Tretlager, welches ein Kurbelgehäuse 14 und eine Kurbelwelle 15 aufweist.

Im Bereich einer Bremsanlage 30, mittels welcher über Bremsleitungen 32 bei Betätigung des Bremshebels 31 die Bremsen ein Zugriff auf die Bremsschreiben 34 initiierbar ist, ist auch eine Ausführungsform der erfindungsgemäßen Bremsanpassungseinrichtung 100 vorgesehen, entweder für eine der Bremsen 33 oder für beide Bremsen 33. In der Darstellung der Figur 1 weist die Bremsanlage 30 im Bereich jeder der Bremsen 33 eine eigene Bremsanpassungseinrichtung 100 zur individuellen Einstellung der Steifigkeit der jeweiligen Bremse 33 auf. Dies ist jedoch nicht zwingend.

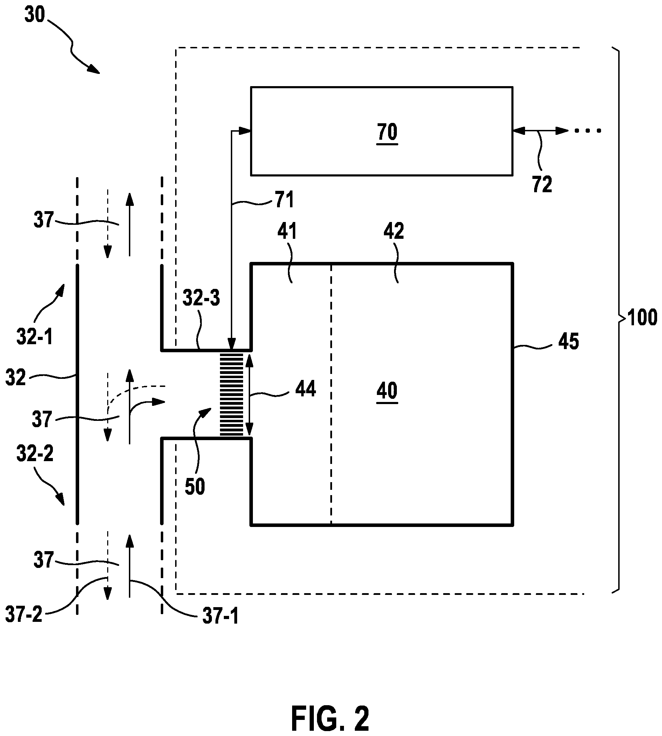

Figur 2 zeigt in einer schematischen Darstellung eine allgemeine Ausführungsform der erfindungsgemäßen Bremsanpassungseinrichtung 100 im Zusammenwirken mit einer Bremsleitung 32 einer übergeordneten hydraulischen Bremsanlage 30.

Die Ausführungsform der erfindungsgemäßen Bremsanpassungseinrichtung 100 gemäß Figur 2 besteht dem Kern nach aus einem Anpassungsbehälter 40 mit einem Gehäuse 45 und einer Öffnung 44. Im Bereich der Öffnung 44 ist hier ein Fluidwiderstandselement 50 vorgesehen, welches die Öffnung 44 vollständig überspannt. Alternativ dazu kann das Fluidwiderstandselement 50 auch weiter in das Innere des Gehäuses 45 des Anpassungsgefäßes 40 hineinversetzt sein und dort, zum Beispiel an der gestrichelt markierten Position zur Unterteilung des Inneren des Gehäuses 45 und mithin des Anpassungsgefäßes 40 in ein erstes Anpassungskompartiment 41 und ein zweites Anpassungskompartiment 42 bewirken.

Das Anpassungsgefäß 40 ist über das Fluidwiderstandselement 50 mit der Leitung 32 der übergeordneten hydraulischen Bremsanlage 30 hydraulisch verbunden. Bei der Ausführungsform gemäß Figur 2 erfolgt dies über eine Abzweigungsleitung 32-3 aus der Bremsleitung 32, so dass diese in einen geberseitigen Abschnitt 32-1 und einen brems- oder nehmerseitigen Abschnitt 32-2 unterteilt wird.

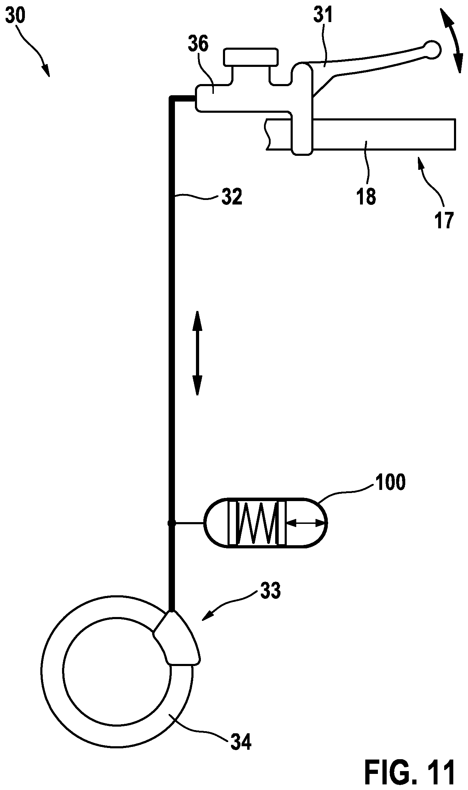

Im Betrieb strömt in der Bremsleitung 32 das Bremsfluid 37, und zwar in einer Hinrichtung 37-1 und beim Betätigen der Bremsanlage 30, z.B. über einen Bremshebel 31 aus einem Geberzylinder 36, der in einer der Figuren 11 ff. schematisch gezeigt ist, und in einer Rückrichtung 37-2 beim Lösen des Betätigens der Bremsanlage 30, z.B. beim Loslassen des Bremshebels 31.

Im Bereich des Einmündens oder Ausmündens der Abzweigungsleitung 32-2 wird dabei ein Teilstrom des Bremsfluids 37 abgezweigt oder beim Rückströmen ggf. dem Hauptstrom hinzugefügt. Dabei wird der Anteil an abgezweigtem Bremsfluid 37, welcher in Richtung auf das Anpassungsgefäß zugeführt wird, durch den Fluidwiderstand des Fluidwiderstandselements 50 behindert. In einem Extremfall, bei maximalem Widerstand, findet keine Aufteilung des Bremsfluids 37 in die Abzweigungsleitung 32-3 hinein statt. Die Bremsanlage 30 besitzt in diesem Fall die Bissigkeit oder Steifigkeit, wie sie in etwa bei einer nicht erfindungsgemäß modifizierten Bremsanlage vorherrschen würde. Bei minimalem Fluidwiderstand wäre dagegen das Aufteilungsverhältnis z.B. in etwa durch die Leitungsquerschnitte von eigentlicher Bremsleitung 32 und Abzweigungsleitung 32-3 bestimmt.

Für eine Steuerbarkeit der Bissigkeit oder Steifigkeit der erfindungsgemäßen Bremsanlage 30 ist es erforderlich, den Fluidwiderstand des Fluidwiderstandselements 50 einzustellen. Dies kann rein manuell erfolgen, automatisch über ein in seinen Kompressionseigenschaften von äußeren Bedingungen, zum Beispiel Temperatur, abhängiges Medium oder aber gesteuert über eine in Figur 2 dargestellte Auswerte- und Steuereinheit 70, die über eine erste Steuer- und Messleitung 71 Einfluss nehmen kann auf das Fluidwiderstandselement 50 in direkter Weise oder unter Zwischenschaltung eines - hier nicht dargestellten - Stellmechanismus oder dergleichen.

Zusätzlich können ein oder mehrere weitere Steuer- und Messleitungen 72 vorgesehen sein, die mit externen Aggregaten verbunden sind, zum Beispiel Sensoren, anderen Steuer- und Auswerteeinheiten und dergleichen, bei welchen Daten erfasst werden, die mit einer Bewertung zu einer entsprechenden Anpassung des Fluidwiderstandselements 50 über die Auswerte- und Steuereinheit 70 führen, und folglich auch zu einer Anpassung der Steifigkeit und Bissigkeit der gesamten Bremsanlage 30.

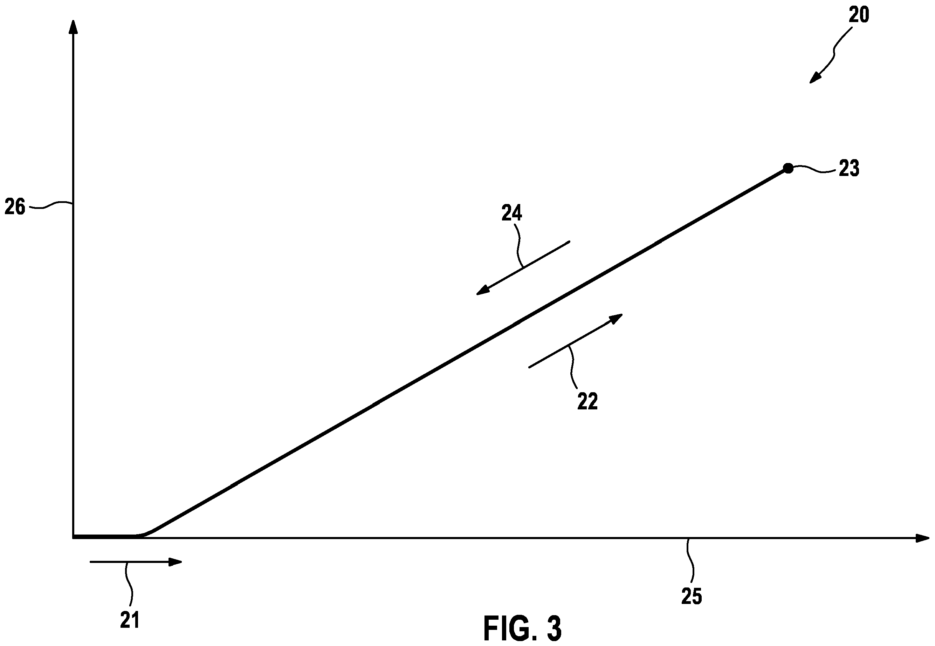

Figur 3 zeigt einen Graphen 20, bei welchem an der Abszisse 25 der Betätigungsweg oder die Betätigungskraft zum Betätigen einer Bremsanlage 30 und auf der Ordinate 26 entsprechend die ausgeübte Bremskraft oder die Bewegung des Bremselements als Funktion voneinander aufgetragen sind. Der Graph 20 zeigt das Hystereseverhalten beim Bremsvorgang, nämlich beginnend mit (i) einer ersten Phase 21, entsprechend einem Todweg bis zum Erreichen eines Bremspunkts oder Druckpunkts, einer zweiten Phase 22 mit einem ersten linearen Anstieg 22, bei welchem die ausgeübte Betätigungskraft und die bewirkte Bremskraft zueinander proportional sind, (iii) einer dritten Phase 23 des Loslassens und (iv) einer vierten Phase 24 eines im Wesentlichen linearen und gegebenenfalls in Hysterese verschobenen Rücklaufs des Bremsvorgangs.

Figur 3 zeigt in Form von Graphen 20-1 bis 20-3 den Verlauf der Phasen 22 mit linearem Anstieg beim Aufnehmen der Bremsfunktion gemäß Figur 3 für verschieden bissig oder steif eingestellte erfindungsgemäße Bremsanlagen 30. Dabei ist die Steigung der Spur des Graphen 20-1 nach Durchlaufen der Todstrecke 21 geringer, das Bremsen somit weniger bissig oder steif, als dies bei den nachfolgenden Spuren der Graphen 20-2 und 20-3 der Fall ist. Die Steigung der jeweiligen Phasen ist dabei jeweils direkt ein Maß für die Bissigkeit oder Steifigkeit der Bremse.

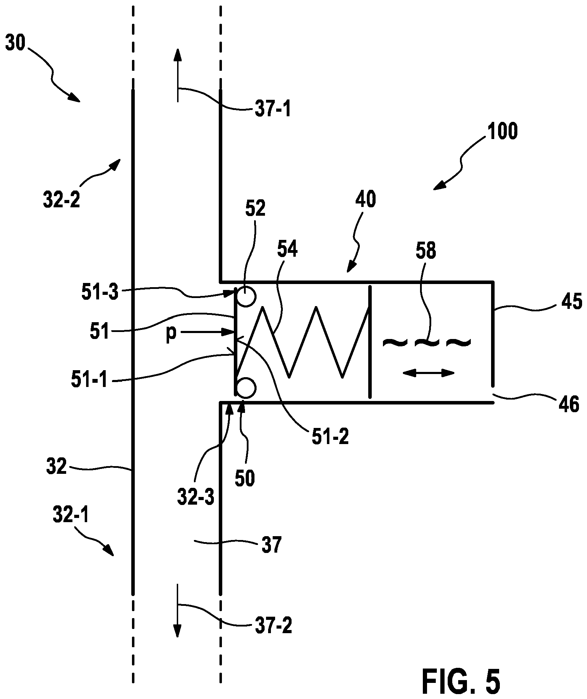

Die Figuren 5 bis 10 zeigen verschiedene Ausführungsformen der erfindungsgemäßen Bremsanpassungseinrichtung 100, bei welcher als Fluidwiderstandselement 50 jeweils eine Membran 51 eingesetzt wird, deren Vorderseite 51-1 der Bremsleitung 32 zugewandt, deren Rückseite 51-2 von der Bremsleitung 52 abgewandt ist und deren Rand 51-3 im Zusammenhang mit einer Membranaufhängung 52 entsprechend im Übergangsbereich zwischen Abzweigungsleitung 32-3 und Anpassungsgefäß 40 mit dessen Öffnung 44 angebracht ist.

Bei der Ausführungsform gemäß Figur 5 wird die Membran 51 oder Wand 51 von deren Rückseite 51-2 durch eine elastische Einrichtung 54, zum Beispiel in Form einer Feder, vorgespannt, wobei die Vorspannung der elastischen Einrichtung 54 durch eine entsprechende Vorspannungseinrichtung 58 eingestellt werden kann.

Dargestellt ist noch die optionale Ausgleichsöffnung 46 im Gehäuse 45 des Anpassungsgefäßes 40, die für einen Volumenausgleich sorgt, wenn in diesem Bereich ein nicht oder nicht ausreichend kompressibles Medium verwendet wird.

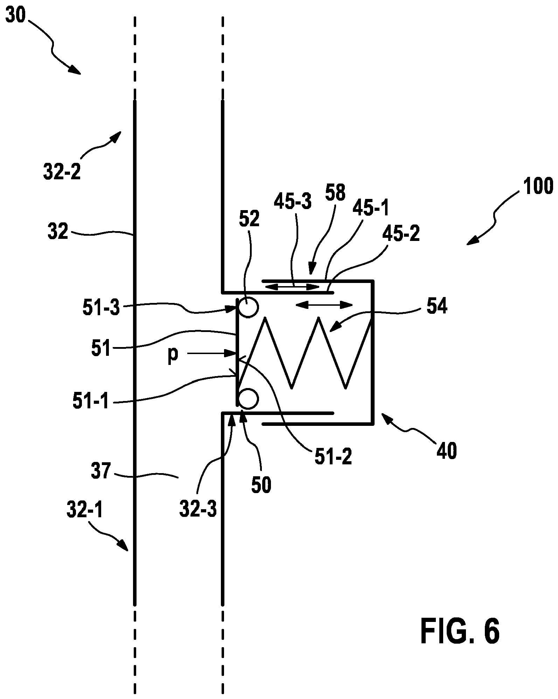

Figur 6 zeigt eine zur Figur 5 ähnliche Darstellung, bei welcher die Vorspanneinrichtung 58 zum Einrichten der Vorspannung des elastischen Elements 54 gebildet wird von einem ersten Gefäß- oder Gehäuseteil 45-1 als Hülse mit einem Schraubgewinde 45-3, an dessen Boden sich das Membran 51 gegenüberliegende Ende des elastischen Elements 54 abstützt. Durch verschieden tiefes Ein- und verschiedenes Herausschrauben am zweiten oder inneren Gefäß- oder Gehäuseteil 45-2 mittels des Gewindes 45-3 wird die komprimierte Länge des elastischen Elements 54 und damit der auf der Rückseite 51-2 der Membran 51 wirkende Druck durch die elastische Einrichtung variiert, und damit auch das Vermögen der Membran 51, vom Druck p des Bremsfluids 37 in der Bremsleitung 32 deformiert zu werden.

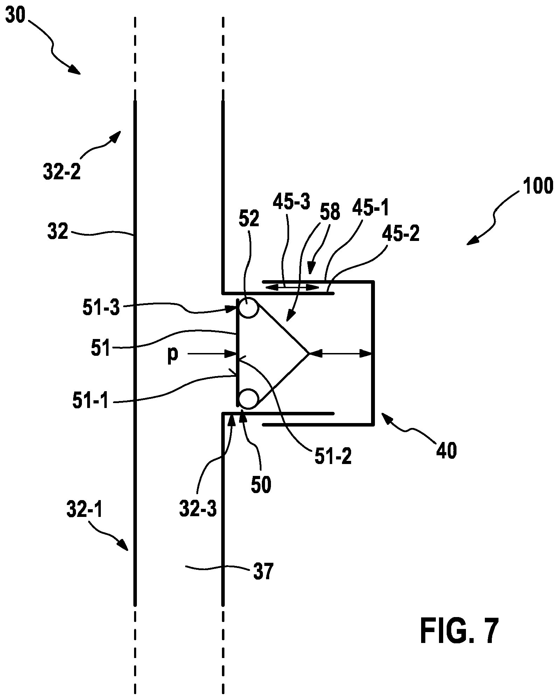

Bei der Ausführungsform gemäß Figur 7 wird die Membran 51 über deren Rand 51-3 und über die Aufhängung 52 durch einen Zug mittels der Vorspanneinrichtung 58 durch entsprechendes Ein- und Ausschrauben der Gehäuseteile 45-1 und 45-2 mittels des Gewindes 45- 3 vorgespannt.

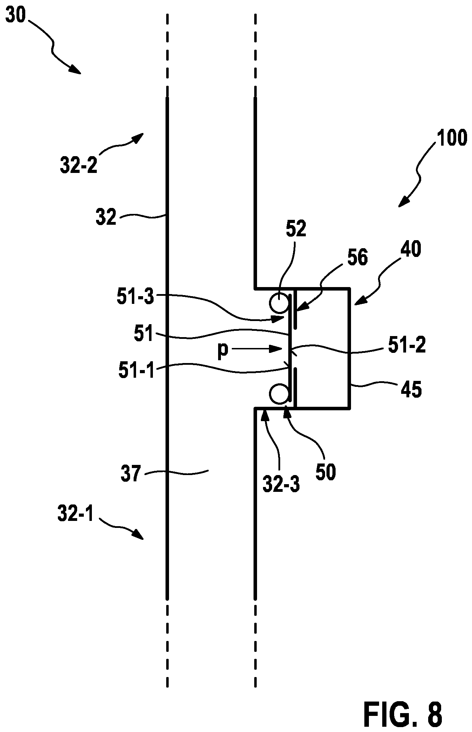

Bei der Ausführungsform gemäß Figur 8 ist auf der Rückseite 50-2 der Membran 51 eine Lochblende 56 vorgesehen, deren Lochöffnung in Bezug auf die Membran zentral angeordnet ist und deren Durchmesser variierbar ist. Je nach Größe der Öffnung der Lochblende 56 wird die Membran 51 an deren Rückseite 51-2 mehr oder weniger stark abgestützt und kann daher von der Vorderseite 51-1 her durch den Druck p des Bremsfluids 37 in der Bremsleitung 32 unterschiedlich stark in Richtung auf das Anpassungsgefäß 40 zu komprimiert werden.

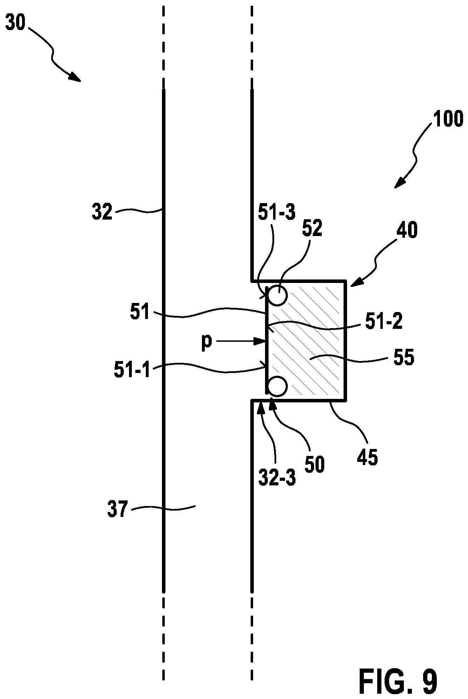

Bei der Ausführungsform gemäß Figur 9 befindet sich im Inneren des Anpassungsgefäßes 40 auf der Rückseite 51-3 der Membran 51 zugewandten Seite ein Anpassungsfluid 55, welches in seinem Volumen, seinem Druck und/oder seiner Kompressibilität einstellbar ist, um dem Druck p des Bremsfluids 37 in der Bremsleitung 32 einen variierbaren Gegendruck entgegen zu stellen, so dass auf diese Weise die Deformierbarkeit der Membran 51 von deren Vorderseite 51-1 und damit die Bissigkeit oder Steifigkeit des Bremsverhaltens der erfindungsgemäßen hydraulischen Bremsanlage 30 gemäß Figur 9 variierbar ist.

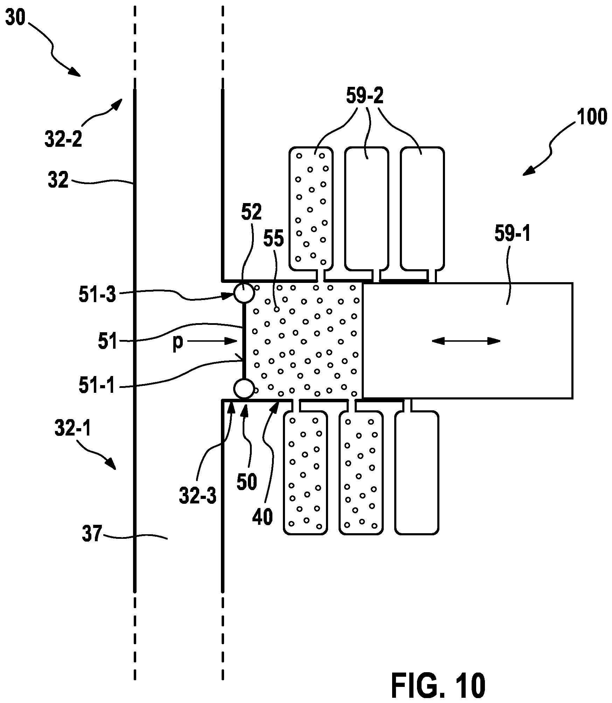

Bei der Ausführungsform gemäß Figur 10 werden über einen Kolben 59-1 verschiedene Volumina 59-2 durch Verschieben des Kolbens 59-1 im Anpassungsgefäß 40 angeboten, so dass auf diese Weise das Volumen und/oder die Kompressibilität des Anpassungsfluids 55, die Deformierbarkeit der Membran 51 und folglich die Bissigkeit oder Steifigkeit des Bremsverhaltens der erfindungsgemäßen hydraulischen Bremsanlage 30 gemäß Figur 10 variierbar sind.

Die Figuren 11 bis 14 zeigen in schematischer Ansicht verschiedene Ausführungsformen der erfindungsgemäßen Bremsanlage 30 unter Verwendung einer Ausführungsform der erfindungsgemäßen Bremsanpassungseinrichtung 100, also in verschiedenen Anwendungen, wobei die erfindungsgemäße Bremsanlage 30 jeweils mit einem oder als ein ABS-System 90 ausgebildet sein kann.

Diese Aspekte werden nachfolgend im Detail erläutert.

Diese und weitere Merkmale und Eigenschaften der vorliegenden Erfindung werden an Hand der folgenden Darlegungen weiter erläutert:

Mit dem Begriff der Bissigkeit oder Steifigkeit einer Bremse 33 oder Bremsanlage 30 ist im Sinne der vorliegenden Erfindung das Ansprechverhalten der Bremse 33 oder Bremsanlage 30 während des Druckauf- und -abbaus gemeint.

In Figur 3, die den Bremskraftverlauf einer Fahrradbremse zeigt, kann darunter z.B. die Steigung im Bereich 22 verstanden werden.

Im Graphen der Figur 3 sind folgende Phasen zu erkennen:
(21) Weg bis zum Druckpunkt oder Bremspunkt,
(22) linearer Anstieg des Bremsdruckes mit zunehmender Kraft oder zunehmendem Betätigungsweg,
(23) Beginn/Starten des Loslassens und
(24) Rücklauf, welcher gegebenenfalls auch eine Hysterese beinhalten kann.

Viele und speziell ältere Menschen sind mit der Bissigkeit heutiger Bremsanlagen 30 und insbesondere Scheibenbremsen überfordert. In Notbremssituationen kann dies zu einem Überbremsen mit Sturzfolge führen. Eine einstellbare Aufweichung des Bremsverhaltens wäre wünschenswert:

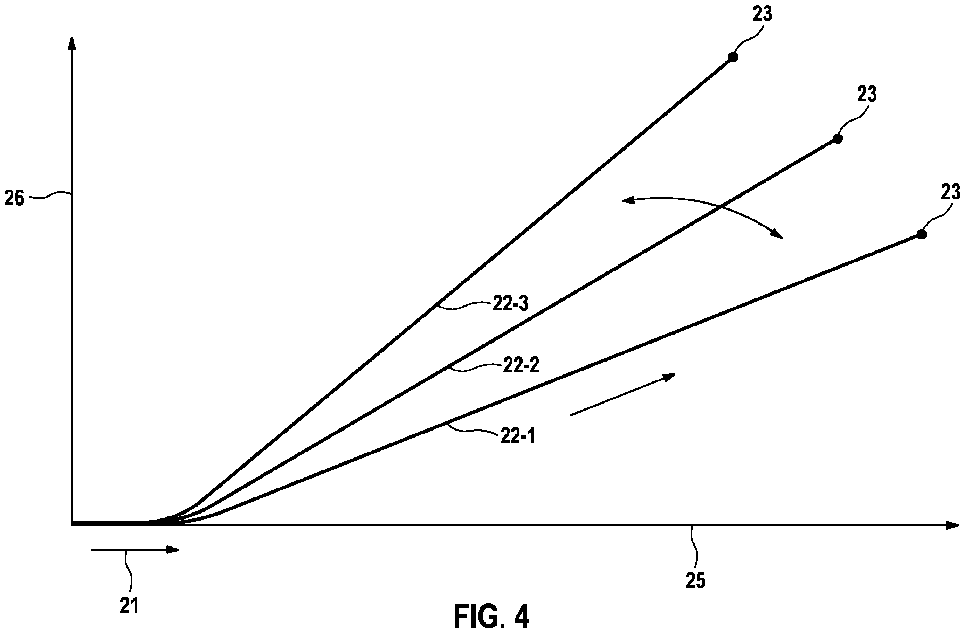

Figur 4 illustriert den Effekt der einstellbaren Bissigkeit.

Eine - gegebenenfalls variable - Aufweichung des Bremsverhaltens einer Bremsanlage 30 erweitert auch die Freiräume in Gestaltung und Materialwahl von Bremskomponenten. Beispielsweise können damit Einschränkungen bezüglich Einbauort eines ABS-Systems reduziert werden, die dadurch begründet sein können, dass beispielsweise eine zu kurze Leitung zum Geber- oder Nehmerkolben (mit einer entsprechend hohen Steifigkeit) die ABS-Regelung ungünstig beeinflusst.

Bindet man die Steifigkeitsveränderung in eine Regelung ein, sind besondere Anwendungen möglich, z.B.:
- Reduzierte Bissigkeit bei hohen Geschwindigkeiten,
- Ausgleich von temperaturabhängigen und/oder lebensdauerbedingten Steifigkeitsveränderungen der Leitungen 32, der Bremsflüssigkeit 37, insbesondere für bremsregelnde Systeme wie ABS 90,
- Anwendungen mit einer sehr schnellen Regelung, z.B. im 10ms-Bereich, mit Einbeziehung der Steifigkeitsregelung in die direkte ABS-Regelung, um z.B. das begrenzte Reservoir pumpenloser ABS-Systeme 90 besser zu nutzen, und andere
- neuartige und vereinfachte ABS-Systeme.

Ein Erfindungsgegenstand ist ein in ein Bremsleitungssystem 32 als Bremsanpassungseinrichtung 100 integrierbares Element, welches in der Lage ist, ein bestimmtes und einstellbares Volumen des Bremsfluids 37 aus der Bremsleitung 32 aufzunehmen und damit den Druck im System und insbesondere in der Bremsleitung 32 zu reduzieren, mit der Besonderheit, dass der Druck, der notwendig ist, um das Volumen eines Anpassungsgefäßes 40 der Bremsanpassungseinrichtung 100 zu befüllen, einstellbar ist, gegebenenfalls über einen einstellbaren Fluidwiderstand, der zum Befüllen überwunden werden muss.

Dies erlaubt auch eine Regelung direkt auf den Druck - vorteilhaft für ein ABS-System 90, insbesondere bei begrenztem Regelvolumen und/oder pumpenlosen ABS-Systemen 90 - und nicht nur indirekt via viskositäts- und druckabhängigem Volumenstrom.

Ein Ausführungsbeispiel besteht aus einem Zylinder als Gehäuse 45 des Anpassungsgefäßes 40 mit beweglicher Membran 51 auf einem Federelement 54, ähnlich einem Druckabbau-Reservoir eines ABS-Systems, mit einer zusätzlichen Vorspannmöglichkeit 58 des Federelements 54, wie dies in Figur 5 gezeigt ist.

Figur 6 zeigt ein Ausführungsbeispiel mit Schraubgewinde, d.h. das Anpassungsgefäß 45 besteht aus zwei miteinander über ein Gewinde 45-3 verschraubbaren Gehäuseteilen 45-1, 45-2.

Ein weiteres Ausführungsbeispiel zeigt in Figur 7 eine Membran 51 mit veränderbarer Steifigkeit, beispielsweise mit einer Spannvorrichtung 58 oder in Figur 8 einer dahinter liegender variabler Lochblende 56.

Alternativ kann sich gemäß Figur 9 hinter einer Membran 51 ein Medium 55 mit einstellbarer Kompressibilität befinden.

Als Medien 55 mit einstellbarer Kompressibilität sind beispielsweise (smarte) Hydrogele denkbar. Diese können u.a. auf elektrische Stimuli ihr Volumen und/oder ihre Kompressibilität ändern. Hydrogele mit steuerbarer Volumenänderung könnten auch genutzt werden, um im Ausführungsbeispiel der Figur 3 als verstellbare Vorspannung der Feder 54 zu fungieren. Denkbar als Medium 55 mit einstellbarer Kompressibilität im Ausführungsbeispiel nach Figur 9 wäre auch ein Medium mit Gasblase, deren Kompressibilität durch lokales Erhitzen verändert wird.

Als weitere Variante des Ausführungsbeispiels nach Figur 9 denkbar ist eine Gasblase mit mechanisch verstellbarem Volumen, beispielsweise durch eine ventilgesteuerte Hintereinanderschaltung mehrerer einzelner Gasvolumen, z.B. gemäß Figur 10. Hier wird also ein gasförmiges Medium mit veränderlichem Gasvolumen verwendet, wodurch die Kompressibilität gesteuert werden kann

### Applikationen für manuelle Einstellung

Bei den Ausführungsbeispielen der Figuren 1 bis 10 könnte die Anpassungseinrichtung 100 - gegebenenfalls auch nachträglich - in jede Bremsanlage 30 integriert werden, um die Bissigkeit des Betriebs der Bremse 33 insbesondere anzupassen und zu erhöhen oder zu senken, je nach Ausgangslage, zum Beispiel werksseitig mittiger Einstellung. Die Bremsanpassungseinrichtung 100 zum Verstellen der Bissigkeit kann sowohl separat in die Bremsleitung 32 montiert als auch in der Bremsbetätigungseinrichtung (Bremshebel 31) oder in die Bremskolbengarnitur integriert werden. Auch könnte mit solchen Varianten die gewünschte Grundsteifigkeit des Leitungssystems für ein ABS-System 90 manuell eingestellt werden.

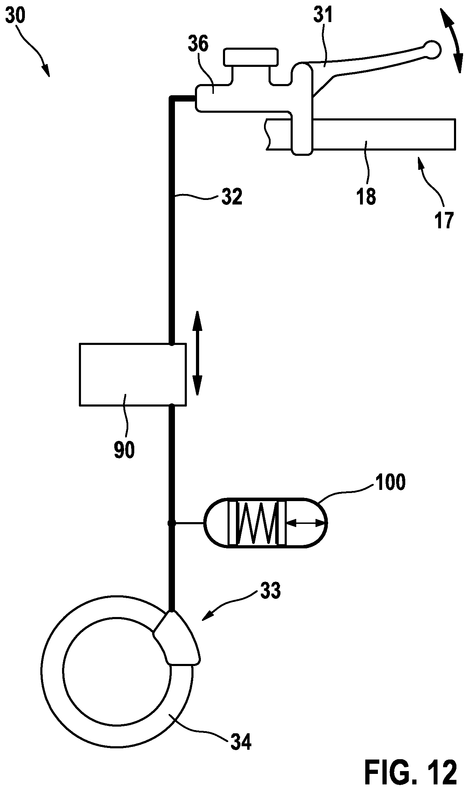

Es bieten sich verschiedene Anwendungen einer manuell verstellbaren Bremsanpassungseinrichtung 100 an, wie dies in den Figuren 11 und 12 grundsätzlich gezeigt ist.

### Anwendungen bei langsamer gesteuerter Regelung

Die folgenden Ausführungsbeispiele zeichnen sich dadurch aus, dass die Steifigkeit von einer Auswerte- und Steuereinheit 70 eingestellt wird. Dies ist in den Ausführungsbeispielen der Figuren 3 bis 9 einfach vorstellbar durch entsprechende Aktuatorik, z.B. über Schrittmotor, Piezoelement, Spulen, oder über eine Flüssigkeit mit einstellbarer Kompressibilität.

Mit eher langsamer Aktuatorik - z.B. im Sekundenbereich für den vollen Verfahrweg - lassen sich Anwendungen realisieren wie z.B.
- eine reduzierte Bissigkeit bei hohen Geschwindigkeiten (unabhängig von ABS), um speziell bei hohen Geschwindigkeiten ein Überbremsen - z.B. durch Panikbremse und ungewohnte Bissigkeit der Bremsen 33 zu vermeiden,
- ein Ausgleichen von z.B. temperaturabhängigen oder lebensdauerbedingten Steifigkeitsveränderungen der Leitungen und/oder der Bremsflüssigkeit, insbesondere bei bremsregelnden Systemen wie ABS-Systemen 90.

Die Anwendungen in den Figuren 11 bis 13 können bei langsamer gesteuerter Regelung erfolgen.

Dabei kann bei Figur 11 eine vom Fahrzeug gesteuerte Veränderung der Bremssteifigkeit erfolgen, z.B. In Abhängigkeit von der Geschwindigkeit.

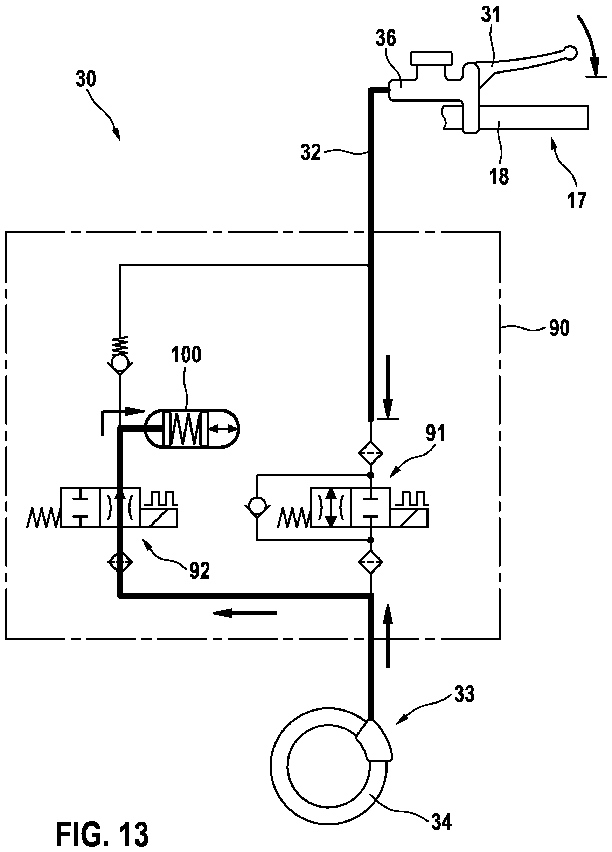

Gemäß den Figuren 12 und 13 kann an eine Kombination mit einem ABS-System 90 gedacht werden, wobei durch die erfindungsgemäße Bremsanpassungseinrichtung 100 mit variabler Steifigkeit eine bestmögliche Ausnutzung eines gegebenenfalls begrenzten Regelvolumens des ABS-Systems 90 erfolgt.

Mit der erfindungsgemäßen Anpassungseinrichtung 100 ist mit einer schnellen Regelbarkeit der Steifigkeit auch ein vereinfachtes ABS-System mit nur einem Ventil 91 denkbar, wie dies in Figur 12 gezeigt ist.

Figur 12 zeigt also in einer Bremsanlage 30 ein schlankes ABS-System, welches gebildet wird von einem Einlassventil 91. Ob Volumen entzogen wird oder nicht, wird hier über die Steifigkeit der als Akkumulator wirkenden Bremsanpassungseinrichtung 100 eingestellt.

## Patentansprüche

1. Bremsanpassungseinrichtung (100) für eine hydraulische Bremsanlage (30), für ein mit Muskelkraft und zusätzlich mit oder ohne Motorkraft antreibbares Fahrzeug (1), Fahrrad, Elektrofahrrad, eBike und/oder Pedelec,
- mit einem Anpassungsgefäß (40) und einem Fluidwiderstandselement (50),
- wobei das Anpassungsgefäß (40) über das Fluidwiderstandselement (50) mit einer Bremsleitung (32), einem Geber (36) und/oder einem Nehmer (33) der Bremsanlage (30) hydraulisch verbindbar ist und
- wobei das Fluidwiderstandselement (50) für einen anpassbaren Fluidübertritt zwischen Bremsleitung (32), dem Geber (36) bzw. dem Nehmer (33) und Anpassungsgefäß (40) mit einem steuerbar anpassbaren Fluidwiderstand gegenüber einem Bremsfluid (37) in der Bremsleitung (32), dem Geber (36) bzw. dem Nehmer (33) ausgebildet ist, wobei das Fluidwiderstandselement (50) ein Durchströmungselement aufweist, welches eine Öffnung (44) des Anpassungsgefäßes (40) für einen Fluiddurchtritt verschließt und/oder das Anpassungsgefäß (40) in zwei voneinander getrennte Kompartimente (41, 42) unterteilt und **dadurch gekennzeichnet, dass** das Durchströmungselement (57) einen variierbaren Strömungswiderstand aufweist.

2. Bremsanpassungseinrichtung (100) nach Anspruch 1, **dadurch gekennzeichnet, dass** der variierbarer Strömungswiderstand des Durchströmungselements über einen entsprechend variierbaren effektiven Strömungsquerschnitt realisiert wird.

3. Bremsanpassungseinrichtung (100) nach Anspruch 1 oder 2,
bei welcher das Fluidwiderstandselement (50) eine Membran (51) oder Wand (51) aufweist, welche eine Öffnung (44) des Anpassungsgefäßes (40) für einen Fluiddurchtritt verschließt und/oder das Anpassungsgefäß (40) in zwei voneinander getrennte Kompartimente (41, 42) unterteilt.

4. Bremsanpassungseinrichtung (100) nach einem der vorhergehenden Ansprüche,
bei welcher die Membran (51) oder Wand (51) eine variierbare Steifigkeit aufweist.

5. Bremsanpassungseinrichtung (100) nach Anspruch 4,
bei welcher die variierbare Steifigkeit der Membran (51) oder Wand (51) bewirkt wird durch:
- eine variierbare Elastizität, innere Beweglichkeit, insbesondere Dehnbarkeit und/oder Biegbarkeit, und/oder äußere Verschiebbarkeit,
- eine variierbare Vorspannung einer die Membran (51) oder Wand (51) von einer Rückseite (51-2) der Membran (51) unterstützenden elastischen Einrichtung (54), insbesondere einer Feder,
- eine Unterstützung der Membran (51) oder Wand (51) von einer Rückseite (51-3) durch ein Anpassungsfluid (55) entsprechend einer variierbaren Kompressibilität, entsprechend einem variierbaren Druck und/oder entsprechend einem variierbaren Volumen,
- eine Unterstützung der Membran (51) oder Wand (51) von einer Rückseite (51-3) durch eine sich von einem Rand (51-3) der Membran (51) her sich erstreckenden Lochblende (56) entsprechend einem variierbaren Durchmesser des Lochs,
- eine über eine Aufhängung (52) der Membran (51) oder Wand (51) - insbesondere über deren Rand (51-3) - aufprägte entsprechend variierbare Zugspannung
oder deren Kombination

6. Bremsanpassungseinrichtung (100) nach einem der vorangehenden Ansprüche,
mit einer Auswerte- und Steuereinheit (70), welche zur Steuerung des Zustands des Fluidwiderstandselements (50) ausgebildet ist, insbesondere über eine Steuerung des Wertes des Fluidwiderstands des Fluidwiderstandselements (50).

7. Hydraulische Bremsanlage (30) für ein mit Muskelkraft und zusätzlich mit oder ohne Motorkraft antreibbares Fahrzeug (1), Fahrrad, Elektrofahrrad, eBike und/oder Pedelec, mit:
- einer Bremse (33),
- einer Bremsleitung (32) zur hydraulischen Verbindung der Bremse (33) mittels eines Bremsfluids (37) und
- einer Bremsanpassungseinrichtung (100) nach einem der Ansprüche 1 bis 6, welche mit der Bremsleitung (32) über das Fluidwiderstandselement (50) der Bremsanpassungseinrichtung (100) hydraulisch verbunden ist.

8. Bremsanlage (30) nach Anspruch 7,
bei welcher das Anpassungsgefäß (40) über eine Abzweigungsleitung (32-3) zwischen einem geberseitig gelegenen Abschnitt (32-1) der Bremsleitung (32) und einem bremsseitig gelegenen Abschnitt (32-2) der Bremsleitung (32) mit der Bremsleitung (32) hydraulisch verbunden ist.

9. Mit Muskelkraft und zusätzlich mit oder ohne Motorkraft antreibbares Fahrzeug (1) und insbesondere Fahrrad, Elektrofahrrad, eBike oder Pedelec, mit:
- mindestens einem Rad (9-1, 9-2) und
- einer Bremsanlage (30) nach Anspruch 8 zum Bremsen des mindestens einen Rades (9-1, 9-2).

## Claims

1. Brake adaptation device (100) for a hydraulic brake system (30), for a vehicle (1) which is able to be driven with muscle power and additionally with or without motor power, bicycle, electric bicycle, eBike and/or pedelec,
- having an adaptation vessel (40) and a fluid resistance element (50),
- wherein the adaptation vessel (40) is hydraulically connectable to a brake line (32), to a master (36) and/or to a slave (33) of the brake system (30) via the fluid resistance element (50), and
- wherein the fluid resistance element (50) is configured for an adaptable transfer of fluid between the brake line (32), the master (36) and/or the slave (33) and the adaptation vessel (40) with a controllably adaptable fluid resistance with respect to a brake fluid (37) in the brake line (32), the master (36) and/or the slave (33),
wherein the fluid resistance element (50) has a throughflow element which closes off an opening (44) of the adaptation vessel (40) for a passage of fluid and/or which subdivides the adaptation vessel (40) into two compartments (41, 42) which are separated from one another, and
**characterized in that** the throughflow element (57) has a variable flow resistance.

2. Brake adaptation device (100) according to Claim 1, **characterized in that** the variable flow resistance of the throughflow element is realized via a correspondingly variable effective flow cross section.

3. Brake adaptation device (100) according to Claim 1 or 2,
in which the fluid resistance element (50) has a diaphragm (51) or wall (51) which closes off an opening (44) of the adaptation vessel (40) for a passage of fluid and/or which subdivides the adaptation vessel (40) into two compartments (41, 42) which are separated from one another.

4. Brake adaptation device (100) according to one of the preceding claims,
in which the diaphragm (51) or wall (51) has a variable stiffness.

5. Brake adaptation device (100) according to Claim 4, in which the variable stiffness of the diaphragm (51) or wall (51) is brought about by:
- a variable elasticity, internal mobility, in particular extensibility and/or flexibility, and/or external displaceability,
- a variable prestress of an elastic device (54), in particular a spring, supporting the diaphragm (51) or wall (51) from a rear side (51-2) of the diaphragm (51),
- support of the diaphragm (51) or wall (51) from a rear side (51-3) by way of an adaptation fluid (55) according to a variable compressibility, according to a variable pressure and/or according to a variable volume,
- support of the diaphragm (51) or wall (51) from a rear side (51-3) by way of an orifice plate (56), extending from an edge (51-3) of the diaphragm (51), according to a variable diameter of the orifice,
- a tensile stress imparted via a mounting means (52) of the diaphragm (51) or wall (51) - in particular via the edge (51-3) thereof - and accordingly variable,
or the combination thereof.

6. Brake adaptation device (100) according to one of the preceding claims,
having an evaluation and control unit (70) which is configured for controlling the state of the fluid resistance element (50), in particular via a control of the value of the fluid resistance of the fluid resistance element (50).

7. Hydraulic brake system (30) for a vehicle (1) which is able to be driven with muscle power and additionally with or without motor power, bicycle, electric bicycle, eBike and/or pedelec, having
- a brake (33),
- a brake line (32) for hydraulic connection of the brake (33) by means of a brake fluid (37), and
- a brake adaptation device (100) according to one of Claims 1 to 6, which is hydraulically connected to the brake line (32) via the fluid resistance element (50) of the brake adaptation device (100).

8. Brake system (30) according to Claim 7,
in which the adaptation vessel (40) is hydraulically connected to the brake line (32) via a branch line (32-3) between a section (32-1) of the brake line (32) situated on the master side and a section (32-2) of the brake line (32) situated on the brake side.

9. Vehicle (1) which is able to be driven with muscle power and additionally with or without motor power, in particular bicycle, electric bicycle, eBike or pedelec, having:
- at least one wheel (9-1, 9-2), and
- a brake system (30) according to Claim 8 for braking the at least one wheel (9-1, 9-2).

## Revendications

1. Dispositif d'adaptation de freinage (100) pour un système de freinage hydraulique (30), destiné à un véhicule (1) pouvant être entraîné par la force musculaire et en plus avec ou sans la force d'un moteur, notamment une bicyclette, un vélo électrique, un e-bike et/ou un pédélec,
- comprenant un réservoir d'adaptation (40) et un élément de résistance au fluide (50),
- l'élément de résistance au fluide (50) permettant de raccorder de manière hydraulique le réservoir d'adaptation (40) à une conduite de frein (32), à un transmetteur (36) et/ou à un récepteur (33) du système de freinage (30), et
- l'élément de résistance au fluide (50) étant réalisé pour un transfert de fluide adaptable entre la conduite de frein (32), le transmetteur (36) ou le récepteur (33) et le réservoir d'adaptation (40) avec une résistance au fluide adaptable de manière contrôlée par rapport à un fluide de freinage (37) dans la conduite de frein (32), au transmetteur (36) ou au récepteur (33),
dans lequel l'élément de résistance au fluide (50) présente un élément d'écoulement traversant qui obture une ouverture (44) du réservoir d'adaptation (40) pour un passage de fluide et/ou divise le réservoir d'adaptation (40) en deux compartiments (41, 42) séparés l'un de l'autre, et
**caractérisé en ce que** l'élément d'écoulement traversant (57) présente une résistance à l'écoulement variable.

2. Dispositif d'adaptation de freinage (100) selon la revendication 1, **caractérisé en ce que** la résistance à l'écoulement variable de l'élément d'écoulement traversant est réalisée par une section de passage effective variable en conséquence.

3. Dispositif d'adaptation de freinage (100) selon la revendication 1 ou 2, dans lequel l'élément de résistance au fluide (50) présente une membrane (51) ou une paroi qui obture une ouverture (44) du réservoir d'adaptation (40) pour un passage de fluide et/ou divise le réservoir d'adaptation (40) en deux compartiments (41, 42) séparés l'un de l'autre.

4. Dispositif d'adaptation de freinage (100) selon l'une quelconque des revendications précédentes, dans lequel la membrane (51) ou la paroi (51) présente une rigidité variable.

5. Dispositif d'adaptation de freinage (100) selon la revendication 4, dans lequel la rigidité variable de la membrane (51) ou de la paroi (51) est obtenue par :
- une élasticité variable, une mobilité intérieure, en particulier une extensibilité et/ou flexibilité, et/ou une possibilité de déplacement extérieure,
- une précontrainte variable d'un dispositif élastique (54) assistant la membrane (51) ou la paroi (51) à partir d'une face arrière (51-2) de la membrane (51), en particulier d'un ressort,
- une assistance de la membrane (51) ou de la paroi (51) à partir d'une face arrière (51-3) par un fluide d'adaptation (55) selon une compressibilité variable, selon une pression variable et/ou selon un volume variable,
- une assistance de la membrane (51) ou de la paroi (51) à partir d'une face arrière (51-3) par un diaphragme perforé (56) s'étendant à partir d'un bord (51-3) de la membrane (51) selon un diamètre variable du trou,
- une contrainte de traction exercée par une suspension (52) de la membrane (51) ou de la paroi (51), en particulier par l'intermédiaire de son bord (51-3), et variable en conséquence,
ou une combinaison de ces éléments.

6. Dispositif d'adaptation de freinage (100) selon l'une quelconque des revendications précédentes, comprenant une unité d'évaluation et de commande (70) qui est réalisée pour commander l'état de l'élément de résistance au fluide (50), en particulier par l'intermédiaire d'une commande de la valeur de la résistance au fluide de l'élément de résistance au fluide (50) .

7. Système de freinage hydraulique (30) un véhicule (1) pouvant être entraîné par la force musculaire et en plus avec ou sans la force d'un moteur, notamment une bicyclette, un vélo électrique, un e-bike et/ou un pédélec, comprenant :
- un frein (33),
- une conduite de frein (32) pour le raccordement hydraulique du frein (33) au moyen d'un fluide de frein (37), et
- un dispositif d'adaptation de freinage (100) selon l'une quelconque des revendications 1 à 6 qui est raccordé de manière hydraulique à la conduite de frein (32) par l'intermédiaire de l'élément de résistance au fluide (50) du dispositif d'adaptation de freinage (100) .

8. Système de freinage (30) selon la revendication 7, dans lequel le réservoir d'adaptation (40) est raccordé de manière hydraulique à la conduite de frein (32) par une conduite de dérivation (32-3) entre une partie (32-1) située côté transmetteur de la conduite de frein (32) et une partie (32-2) située côté frein de la conduite de frein (32).

9. Véhicule pouvant être entraîné par la force musculaire et en plus avec ou sans la force d'un moteur (1), et en particulier une bicyclette, un vélo électrique, un e-bike ou un pédélec, comprenant :
- au moins une roue (9-1, 9-2), et
- un système de freinage (30) selon la revendication 8 pour freiner ladite au moins une roue (9-1, 9-2).
